# EUROPEAN PATENT APPLICATION

(11) **EP 4 466 996 A1**
(43) Date of publication of application: **27.11.2024**
(21) Application number: 22920765.9
(22) Date of filing: 28.10.2022
(51) Int. Cl.: A01N 31/02

(54) **ECO-FRIENDLY QUARANTINE COMPOSITION HAVING FUNCTION OF KILLING PHOSPHOLIPID ENVELOPED VIRUS**

(30) Priority: 17.01.2022 KR 20220006505
(71) Applicant: UE Chemical Co., Ltd, Busan 48548 (KR); Korea Research Institute of Chemical Technology, Daejeon 34114 (KR)
(72) Inventor: PARK, Jong Mok, Daejeon 34114 (KR); HWANG, Tae Gyu, Daejeon 34114 (KR); SEO, Bong Kuk, Daejeon 34114 (KR); JEONG, Ga Yeong, Daejeon 34114 (KR); JEONG, Min Ju, Daejeon 34114 (KR); KIM, Sung Chul, Busan 48092 (KR)
(74) Representative: dompatent von Kreisler Selting Werner - Partnerschaft von Patent- und Rechtsanwälten mbB
(86) International application number: PCT/KR2022/016667
(87) International publication number: WO 2023/136435

(57) **Abstract**

The present invention relates to an eco-friendly quarantine composition having a function of killing phospholipid enveloped viruses, which includes: 10 to 40 wt.% of polyoxyethylene lauryl ether; 0.01 to 10 wt.% of polyoxyethylene 2-ethylhexyl ether; 0.01 to 10 wt.% of polyoxyethylene polyoxypropylene alkyl ether and a balance of solvent, based on the total 100 wt.% of the composition. The eco-friendly quarantine composition according to the present invention has 100% of SARS-CoV-2 virus removal rate in 1 minute and an effect of killing 100% of highly pathogenic avian influenza virus in 1 to 10 minutes. The composition has low cytotoxicity such that IC₅₀ value (%) for human epithelial keratinocyte cells (HaCaT), human bronchial epithelial cells (BEAS-2B), and human monocyte cells (THP-1) is in a range of 0.003 to 0.0045, and effects of having antibacterial activity against non-pathogenic strains, and pathogenic strains.

## Description

### [Technical Field]

The present invention relates to an eco-friendly quarantine composition with a function of killing a virus having a phospholipid envelope ("phospholipid enveloped virus"), and more specifically, to an eco-friendly quarantine composition to effectively remove various phospholipid enveloped viruses, such as Covid-19, avian influenza, African swine fever, and severe acute respiratory syndrome.

### [Background Art]

Viruses have a very simple structure consisting of genetic material of RNA or DNA and a protein shell (capsid) that surrounds it. Some viruses may have a membrane made of lipids in addition to the protein shell, and those having a layer (lipid layer, lipid membrane) made of such lipids are the enveloped viruses surrounded by an envelope.

It is known that this lipid layer exists only in the enveloped viruses and is inactivated when exposed to ether or other organic solvents, resulting in loss of infectivity. It is said that the lipid membrane of the enveloped virus plays a major role in introducing its own genes into the genome of a host. If this mechanism is blocked, it is expected that unnecessary side effects will not occur while effectively coping with different types of viruses.

Alcohol-based detergents, which are currently widely used as detergents for removing such viruses, include ethanol as a main component, which exhibits disinfecting effects by dissolving the envelope (phospholipid) of the virus, and is currently widely used in Korea.

Ethanol dissolves the envelope of the enveloped virus composed of these phospholipid layer and protein, to enable the virus free of the envelope to be dead outside, or even if it luckily enters the host, to prevent the virus from penetrating and proliferating in cells.

Meanwhile, since the influenza virus infects the respiratory system, causes systemic symptoms, changes its appearance periodically, and moves to another host before the host dies without killing the host, scientists guess that the influenza virus will survive until the end of mankind. The influenza virus is a virus that causes the greatest economic loss to mankind, and although a preventive vaccine has been developed, it has not been able to catch up with the mutation of the virus, and fundamental treatment of virus has not yet been performed.

Among them, avian influenza (AI) is an acute contagious disease caused by an avian influenza virus infection, and severely damages poultry such as chickens, turkeys, ducks and the like. According to the degree of pathogenicity of the virus, it is largely divided into low pathogenic and highly pathogenic avian influenza.

Four pandemic viruses occurred between 1918 and 2009 include the Spanish flu (A/H1N1) causing the most deaths, the Asian flu (A/H2N2), the Hong Kong flu (A/H3N2), and finally Swine flu (A/H1N1)pdm09 in 2009, which caused 260 deaths in Korea.

The outbreak of the avian influenza virus, which is most likely to cause a fifth pandemic, is continuously being reported. Avian influenza A/H5N1, which began to be discovered in 2003, occurred in wild birds and poultry, and spread to humans, resulting in 454 deaths in 16 countries by September 2017. Further, in the case of avian influenza A/H7N9 occurred in China in 2013, it caused 599 deaths now in 2017.

Meanwhile, severe acute respiratory syndrome (SARS) is a novel contagious disease that has spread worldwide, including Hong Kong, Singapore and Canada, within a few months since the outbreak began in China in the winter of 2002. The causative pathogen is the SARS-associated coronavirus (SARS-coV). SARS-coV is known to cross-species infection from animals to humans by strains of animal-host coronaviruses.

It is known that the basic route of transmission of SARS is direct or indirect contact of mucous membranes through respiratory droplets or contaminated media, and it is reported that symptoms such as fever, malaise, muscle pain, headache and chills, etc. appear, and contagion occurs mainly in the second week.

Patients suspected or presumed of having SARS are quarantined and hospitalized, and strict management is required to prevent contagion. However, since no vaccine or preventive medicine has been developed yet, it remains at the level of preventing infection due to direct contact by refraining from traveling to areas with high risk of infection or thoroughly washing hands.

When the structure of coronavirus is observed by a transmission electron microscope (TEM), it consists of a double phospholipid membrane, and the phospholipid membrane has a structure with a long carbon chain of C₁₀ to C₁₈.

The present inventors have proposed a detergent composition in Korean Patent Application No. 2020-0137611, which is an antiviral composition for virus protection, and includes 10 to 30% by weight (" wt.%") of C₁₃H₂₇(OCH₂CH₂)ₙOH (wherein n = 2 to 15), 0.1 to 5 wt.% of 2-ethylhexyl alcohol ethoxylate, 0.1 to 5 wt.% of a block copolymer of ethylene oxide-propylene oxide, and the balance of water, based on the total 100 wt.% of the composition.

The C₁₃H₂₇(OCH₂CH₂)ₙOH, used as the main component in the above patent, has a branched structure rather than a linear structure of 13 carbon chains, such that this component can be bound well to a hydrophobic portion consisting of a long carbon chain contained in the phospholipid bilayer membrane of coronavirus and increase the aggregation number thus to increase the solubility of the phospholipid membrane of the coronavirus. Using the above-described action, the present inventors have prepared the detergent composition.

In the above patent, when forming a complex phospholipid bilayer membrane structure and micelles using a substance with branched structure, a packing density of the micelles may be reduced due to a repulsive force between hydrophobic hydrocarbons, so that a much more advantageous structure for dissolving a phospholipid bilayer membrane can be formed. However, the C₁₃H₂₇(OCH₂CH₂)ₙOH included as the main component is a material synthesized from petrochemicals and has a lot of branch structures thus to be applicable in many uses, but it is not biodegradable and is environmentally unfavorable, hence causing a problem.

Further, Korean Patent Application No. 2020-0137612 of the present applicant discloses a detergent composition which includes 10 to 30 wt.% of octylphenol ethoxylate (the number (n) of ethylene oxide contained in ethoxylate is 2 to 15), 0.1 to 5 wt.% of 2-ethylhexyl alcohol ethoxylate, 0.1 to 5 wt.% of a block copolymer of ethylene oxide-propylene oxide, and the balance of water, based on the total 100 wt.% of the composition.

According to the above patent, octylphenol ethoxylate is included as the main component responsible for removing and inhibiting the coronavirus, wherein an octyl phenol group in the octylphenol ethoxylate is a C8 alkyl group including an aromatic phenol group, which is bonded well to the hydrophobic portion consisting of a long carbon chain contained in the phospholipid membrane of the coronavirus, while the ethylene oxide portion serves to impart hydrophilicity to the hydrophobicity of the long carbon chain. At the same time, n representing the number of ethylene oxides may be adjusted to 2 to 15, preferably 5 to 10, so that two or more materials having different numbers of n are admixed and used by adjusting the hydrophilicity to a predetermined level.

However, although the octylphenol ethoxylate included as the main component is effective in breaking the phospholipid bilayer membrane, it has an environmentally fatal disadvantage because the alkyl group has a branched structure and the phenol component remains when decomposed.

In addition to the above-described patents, when looking at the prior art to have sterilization and antibacterial activity against viruses, bacteria and fungi including SARS virus and influenza virus, Korean Patent Laid-Open Publication No. 2006-0079388 discloses an inorganic antibacterial agent solution produced by a synthetic method of a nano-sized titanium dioxide photocatalyst using a solution as a raw material, which is obtained by preparing nano-sized silver particle colloids and then admixing the colloids with one or more solvents selected from the group consisting of water containing distilled water, alcohols and a surfactant within a predetermined concentration range, as well as a technique of using the produced inorganic antibacterial agent solution and a distilled solution thereof in the form of vials, sprays, aerosols and the like.

Further, Korean Patent Registration No. 10-1317318 discloses an antibacterial composition for prevention and treatment of seasonal flu or novel influenza caused by A/H1N1 seasonal flu virus; or avian influenza caused by an avian influenza virus selected from A/H9N2 (A/Chicken/Korea/MS96/1996) or A/H1N1, which includes 70 to 80% ethanol-mixed solvent extract composed of galic acid (1), a mixture of para-digalic acid and meta-digalic acid (2), ethyl gallate (4) and a mixture of ethyl para-digallate and ethyl meta-digallate (5) in a content ratio of (4.3:1:7.2:16.3), or penta-O-galloyl glucose, ethyl gallate or a mixture of ethyl p-digallate and ethyl m-digallate which are isolated therefrom as an active ingredient, characterized in that the extract is obtained by cutting dried nut galls into pieces and performing extraction repeatedly 1 to 5 times using 70 to 80% ethanol-mixed solvent in 10-fold or 20-fold of the dried weight through cold-brewing, hot extraction, ultrasonic extraction or reflux cooling extraction method for 2 to 5 hours at an extraction temperature of 20 to 100 °C, followed by concentration under reduced pressure.

With the current technologies, it is still far-off to develop products or vaccines for removing various viruses, as well as, it is also urgently needed to develop an environmentally friendly quarantine product that can effectively kill various viruses with the envelope of a phospholipid bilayer membrane and does not cause irritation when used in humans or animals.

### [Summary of Invention]

### [Problems to be Solved by Invention]

An object of the present invention is to provide an eco-friendly quarantine composition having a function of killing phospholipid enveloped viruses, which is capable of effectively blocking contagion or infection due to viruses by breaking the phospholipid membrane contained in enveloped viruses.

### [Means for Solving Problems]

To achieve the above object, according to an aspect of the present invention, there is provided an eco-friendly quarantine composition having a function of killing a phospholipid enveloped virus, the composition including: 10 to 40% by weight of polyoxyethylene lauryl ether; 0.01 to 10% by weight of polyoxyethylene 2-ethylhexyl ether; 0.01 to 10% by weight of polyoxyethylene polyoxypropylene alkyl ether and a balance of solvent, based on a total 100% by weight of the composition.

According to an embodiment of the present invention, SARS-CoV-2 virus removal rate in a diluted solution containing 0.1% by weight or less of the composition may be 100% in 1 minute.

In addition, according to an embodiment of the present invention, 100% of highly pathogenic avian influenza virus in a diluted solution containing 0.1% by weight or less of the composition may be killed in 1 to 10 minutes.

In addition, the composition may have low cytotoxicity such that IC₅₀ value (%) for human epithelial keratinocyte cells (HaCaT), human bronchial epithelial cells (BEAS-2B), and human monocyte cells (THP-1) is in a range of 0.003 to 0.0045.

In addition, the composition may have antibacterial activity against non-pathogenic strains, and pathogenic strains.

Preferably, the composition maintains neutral pH of 6 to 8.

In addition, the composition may be used by diluting the composition in water with a content of 0.01% to 0.05%.

According to an embodiment of the present invention, the balance of solvent may further include 20% by weight or less of ethanol.

According to an embodiment of the present invention, the composition may further include a preservative within 0.1% by weight of the total weight of the composition.

### [Advantageous effects]

The environmentally friendly quarantine composition according to the present invention has a SARS-CoV-2 virus removal rate of 100% within 1 minute in a diluted solution contained in a content of 0.1 wt.% or less, and an effect of 100% killing highly pathogenic avian influenza virus in 1 to 10 minutes.

Further, IC₅₀ value (%) for human epithelial keratinocyte cells (HaCaT), human bronchial epithelial cells (BEAS-2B), and human monocyte cells (THP-1) may range from 0.003 to 0.0045 thus to exhibit low cytotoxicity, and achieve effects of having antibacterial activity against non-pathogenic strains, and pathogenic strains.

### [Brief Description of Drawings]

FIG. 1 shows measurement results of SARS-CoV-2 virus removal rate of each composition according to Example 2 (the present invention), Comparative Example 1 (composition of Patent Document 1) and Comparative Example 2 (composition of Patent Document 2),
FIGS. 2 and 3 show results of measuring the highly pathogenic avian influenza virus killing effects of the composition according to Example 2 (the present invention, Neutra Best L),
FIGS. 4 and 5 show results of measuring the antibacterial activity of each composition for the same sample as Experimental Example 3.

### [Mode for Carrying out Invention]

Hereinafter, the present invention will be described in more detail.

The terms used herein are employed to describe specific embodiments and are not intended to limit the present invention.

As used herein, the singular form include the plural form unless otherwise the context clearly indicates other cases. In addition, when used herein, "comprise, include," and/or "comprising, including" are used to specify the presence of shapes, numbers, steps, operations, members, elements, and/or groups thereof, and does not exclude the presence or addition of one or more other shapes, numbers, operations, members, elements and/or groups thereof.

The present invention provides an eco-friendly quarantine composition having a function of killing a variety of phospholipid enveloped viruses.

The composition according to the present invention has a configuration which includes 10 to 40 wt.% of polyoxyethylene lauryl ether, 0.01 to 10 wt.% of polyoxyethylene 2-ethylhexyl ether, 0.01% to 10 wt.% of polyoxyethylene polyoxypropylene alkyl ether, and a balance of solvent based on the total 100 wt.% of the composition.

The composition of the present invention preferably includes polyoxyethylene lauryl ether consisting of only a linear structure as a main component (meaning a component included in the largest amount of the composition excluding the solvent). The polyoxyethylene lauryl ether is a nonionic surfactant that has excellent compatibility with anionic and cationic surfactants and exhibits excellent surfactant activity even in an aqueous solution in which acids, alkalis, salts, and the like coexist.

As a result of using the polyoxyethylene lauryl ether consisting of only a linear structure as the main component in a recent experiment, the present inventors have confirmed that the envelope of an enveloped virus was more effectively removed compared to the case of including other components having a branched structure as the main component (Prior Patents 1 and 2).

This is because the alkyl group of the phospholipid constituting the phospholipid bilayer membrane included in the enveloped virus is in the form of a straight chain. Therefore, in the present invention, it was expected that using a structure having a similar linear form as the main component may increase the affinity with the phospholipid bilayer membrane thus to improve a penetrating ability, i.e., permeability when penetrating into the phospholipid bilayer membrane.

In addition, after effectively removing the phospholipid bilayer membrane, it should be able to stably exist in an emulsion state in water. Even at this time, a degree of stability can be improved, and the polyoxyethylene lauryl ether consisting of only a linear structure is biodegradable after use, thereby enabling the production of environmentally friendly compositions.

Such polyoxyethylene lauryl ether is preferably included in an amount of 10 to 40 wt.% of the total weight of the composition, and if it is less than 10 wt.%, the effect of removing the phospholipid bilayer membrane is insufficient, and if it exceeds 40 wt.%, the content of other components is relatively smaller and it may be disadvantageous in preparing an environmentally friendly antiviral composition.

The composition of the present invention may include polyoxyethylene 2-ethylhexyl ether in an amount of 0.01 to 10 wt.% of the total weight of the composition, so as to act as a penetration additive that increases permeability when entering between the phospholipid membranes of the enveloped virus. Since the polyoxyethylene 2-ethylhexyl ether has a less regular structure in which hydrocarbons are substituted in side chains, it may be expected to increase the permeability because it can be spaced apart when entering between the phospholipid bilayer membranes.

Such polyoxyethylene 2-ethylhexyl ether is preferably included in an amount of 0.01 to 10 wt.% of the total weight of the composition, and if it is less than 0.01 wt.%, desired effects cannot be obtained, as well as even if it exceeds 10 wt.%, effects of further increasing the permeability cannot also be obtained, and therefore not desirable.

In addition, the composition of the present invention may include 0.01 to 10 wt.% of polyoxyethylene polyoxypropylene alkyl ether prepared by copolymerizing ethylene oxide and propylene oxide, based on the total weight of the composition.

The polyoxyethylene polyoxypropylene alkyl ether is added to suppress a generation of bubbles that may occur during the manufacture of the eco-friendly quarantine composition having a function of killing a phospholipid enveloped virus according to the present invention, and may be included in 0.01 to 10 wt.% of the total weight of the composition to effectively remove air bubbles.

Further, the eco-friendly quarantine composition according to the present invention is characterized by maintaining a neutral pH of about 6 to 8. Therefore, the present composition has an advantage of minimizing damage or deterioration of the material for which the present composition is used, as well as, is characterized by exhibiting excellent virus killing effects.

Further, the composition of the present invention may include a balance of solvent except for the above components. The solvent may include water or an organic solvent, wherein the water is not particularly limited, such as general tap water or purified water from which all impurities such as dissolved ions, solid particles, microorganisms, and organic substances contained in general water are removed.

Further, if necessary, an alcohol solvent such as ethanol or isopropyl alcohol as an organic solvent is included within 20 wt.% of the total solvent to reduce the viscosity of the final composition or to remove bubbles generated during the manufacture of the composition. In addition, when used at a low temperature, such as in winter, the preservation properties of the composition can be improved.

Further, in order to prevent problems such as mold growth during preservation of the composition according to the present invention and thus improve storage stability, a known preservative may be included within 0.1 wt.% of the total weight of the composition, and the type of preservatives is not particularly limited.

The eco-friendly quarantine composition having a function of killing phospholipid enveloped viruses according to the present invention may be easily prepared by mixing the above respective components well at room temperature (r.t.), wherein the prepared composition has a hydrophobic-hydrophilic balance (HLB) value in a range of 12 to 15, such that, when it is used as an eco-friendly quarantine composition for various uses, micelles may be formed in water thus to increase cleaning effects.

Among these, the composition according to the present invention has a function of effectively killing various viruses with a phospholipid bilayer membrane envelope such as COVID-19, avian influenza, severe acute respiratory syndrome (SARS), middle east respiratory syndrome (MERS), novel Corona-19 virus, and African swine fever.

Further, the composition according to the present invention uses polyoxyethylene lauryl ether having a linear structure as a main component, such that it is effectively biodegraded after use and may solve the problem of residual toxic organic substances in the existing surfactant having a branched structure, thereby enabling the production of an environmentally friendly composition. Therefore, the composition according to the present invention may be safely used without other side effects when used for some purposes such as spraying on the human body or disinfecting hands, or when applied to various animals.

The above-described eco-friendly quarantine composition prepared according to the present invention may be diluted in water and used for various purposes such as spraying, disinfection, and cleaning, etc.

The diluted concentration may be 0.01 to 0.05 wt.% based on 100% of the composition, but it is not limited thereto, and it is obvious to those skilled in the art that the diluted concentration can be adjusted to suit a predetermined purpose.

### EXAMPLES

Hereinafter, the present invention will be described in more detail by way of the following examples. However, the following examples are proposed for illustrative purpose only, and it should not be construed that the range of the present invention is not particularly limited thereto. Further, specific compounds will be illustrated in the following examples, but it is obvious to those skilled in the art that equivalent or similar effects can be exerted even when equivalents thereof are used.

### Examples and Comparative Examples: Preparation of composition

According to the constitutional compositions of Table 1 below, the respective compositions were put into purified water, mixed at 18 °C, and sufficiently stirred to prepare each quarantine composition. In the following Table 1, Comparative Example 1 is the composition of Example 2 in Patent Document 1 of the present applicant, and Comparative Example 2 is the composition of Example 2 in Patent Document 2, wherein each includes a component having a branch structure as a main component and is compared with the present invention.

**[TABLE 1]**

| Content (wt.%) | Polyoxyethyl ene lauryl ether | Polyoxyethyl ene 2-ethylhexyl ether | Polyoxyethyle ne polyoxypropyl ene alkyl ether | C₁₃H₂₇(OCH₂CH₂)_{n 5}OH | Octylphe nol ethoxylat e | Wat er |
|---|---|---|---|---|---|---|
| Example 1 | 10 | 0.1 | 0.2 | - | - | 89.7 |
| Example 2 | 27 | 0.5 | 0.5 | - | - | 72.0 |
| Example 3 | 40 | 5.5 | 3.5 | - | - | 51.0 |
| Comparati ve Example 1⁽¹⁾ | 1.0 | 0.5 | 0.5 | 27 | - | 72.0 |
| Comparati ve Example 2⁽²⁾ | 1.0 | 0.5 | 0.5 | - | 17 | 81.0 |
| (1) Composition of Example 2 in Patent Document 1 | | | | | | |
| (2) Composition of Example 2 in Patent Document 2 | | | | | | |
| (3) Composition with pH 6 in Example 1, pH 7 in Example 2, pH 8 in Example 3. | | | | | | |

### Experimental Example 1: Measurement of SARS-CoV-2 antiviral effect

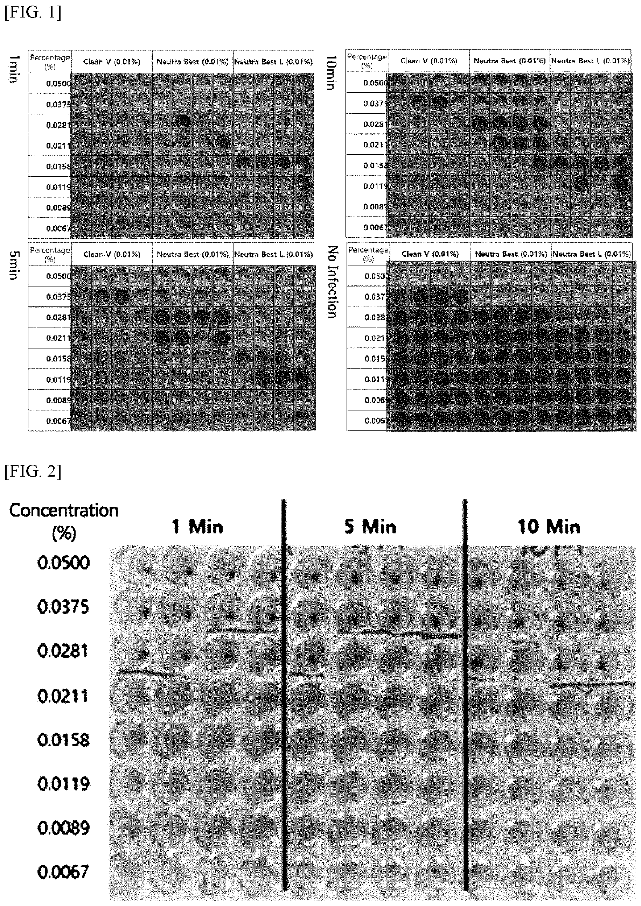

SARS-CoV-2 virus removal rate of each of the compositions according to Example 2 (the present invention, Neutra Best L), Comparative Example 1 (composition of Patent Document 1, Neutra Best), and Comparative Example 2 (composition of Patent Document 2, Clean V) was measured as follows, and results thereof are shown in FIG. 1 below.

Vero cells (monkey kidney epithelial cells) were cultured at 1 × 10⁴ per well in a 96 well cell plate. Then, after dispensing 1×10³ to 5×10³ infectious viruses into EP tubes, virus-cell culture solution (Gibco DMEM-0% FBS) was mixed till a concentration of the composition reached 0.1%, followed by a reaction for a reaction time of 30 seconds, 1 minute, 5 minutes and 10 minutes.

After the reaction was completed, the cell culture solution was quickly frozen using dry ice, and then the sample was stored in a deep freezer at -80 °C. The prepared samples were diluted in a 10-fold step using a cell culture solution in a 96 well U-bottom plate. The cells cultured in the 96 well cell plate were washed once using 1x phosphate buffered saline (PBS), and the diluted sample was transferred to the washed cells and allowed to react for 1 hour and 30 minutes. After completion of the reaction, the previously contained cell culture solution was removed and replaced with a cell culture solution containing TPCK trypsin at an appropriate concentration.

For 2 to 3 days, the cell transformation and SARS-CoV-2 virus proliferation states were visually observed through a microscope, and 3 days after infection, 10% crystal violet dye was used to stain the surviving cells. Results thereof are shown in the following Table 2 and FIG. 1.

**[TABLE 2]**

| | Clean V (0.01%) | | | Neutra Best (0.01%) | | | Neutra Best L (0.01%) | | |
|---|---|---|---|---|---|---|---|---|---|
| Percentage (%) | 1 min | 5 min | 10 min | 1 min | 5 min | 10 min | 1 min | 5 min | 10 min |
| 0.0500 | ND | ND | ND | ND | ND | ND | ND | ND | ND |
| 0.0375 | ND | **50%** | **25%** | ND | ND | ND | ND | ND | ND |
| 0.0281 | ND | ND | ND | **25%** | **100%** | **100%** | ND | ND | ND |
| 0.0211 | ND | ND | ND | **25%** | **75%** | **75%** | ND | ND | ND |
| 0.0158 | ND | ND | ND | ND | ND | **25%** | **100%** | **75%** | **100%** |
| 0.0119 | ND | ND | ND | ND | ND | ND | **25%** | **75%** | **50%** |
| 0.0089 | ND | ND | ND | ND | ND | ND | ND | ND | ND |
| 0.00067 | ND | ND | ND | ND | ND | | ND | ND | ND |

Table 2 above shows the results of measuring the cell viability, wherein each composition according to Comparative Example 2 (composition of Patent Document 2, Clean V) at a diluted concentration of 0.0375% showed a cell viability of 50% at 5 min and 25% at 10 min, respectively. Further, Comparative Example 1 (composition of Patent Document 1, Neutra Best) generally showed cell viability at a diluted concentration of 0.0211%.

Then, referring to the results shown in FIG. 1, cells killed by viruses or cells killed by detergent toxicity were not stained and observed transparently, while surviving cells were stained by crystal violet and observed in dark purple. Neutra Best L according to Example 1 of the present invention at a diluted concentration of 0.0158% killed all viruses at 1 min and 10 min, therefore, it could be confirmed that the cells show a 100% viability rate at the above times, and a 75% viability rate at 5 minutes (see FIG. 1). That is, it could be confirmed that the composition according to the present invention removes 100% of the SARS-CoV-2 virus in a very short time of 1 min.

In addition, it could be seen that, at a diluted concentration of 0.0089% or less, all cells are killed by the virus and measured as not detected (ND). From these results, it is understood that the composition according to the present invention can kill all viruses at a concentration of 0.0158% or less.

From these results, it can be seen that Neutra Best L according to the present invention can effectively kill viruses while the cells may survive even at a lower concentration.

### Experimental Example 2: Measurement of highly pathogenic avian influenza (AI) virus killing effect and cytotoxicity

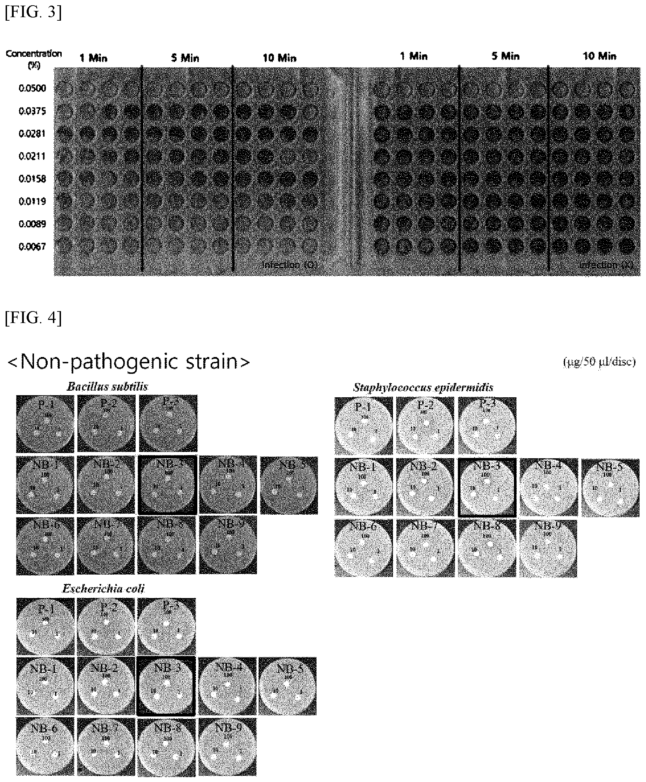

The highly pathogenic avian influenza virus killing effect and cytotoxicity (same as Experimental Example 1) of the composition according to Example 2 (the present invention, Neutra Best L) were measured as follows, and results thereof are shown in FIGS. 2 and 3 below.

For the highly pathogenic avian influenza virus killing effect, a method called Hemagglutinin Assay using red blood cells (RBCs) was used. Specifically, it uses the principle that RBC causes hemolysis by a protein called Hemagglutinin of influenza virus. If the influenza virus is alive, hemolysis occurs using RBC and RBC bursts to appear red color as a whole. Further, if the virus is killed or the cells for growing the virus are killed, red dots are formed because the virus does not exist. This is because the plate used for this experiment has a U-bottom shape, and RBCs are gathered to the bottom by gravity and formed like a single point.

Next, referring to FIG. 2 showing the highly pathogenic avian influenza virus killing effect, when the sample was diluted at a concentration of 0.0375%, it can be seen that the red blood cells survived well and were gathered as red dots at 1 min, 5 min, and 10 min. On the other hand, in the case of a concentration of 0.0281%, 50%, 25% and 75% of red blood cells survived at 1 min, 5 min and 10 min, respectively. As a result, it can be confirmed that, at a concentration of 0.0375% or more, all 100% AI viruses can be killed in a very short time of 1 min.

Referring to FIG. 3 showing results of the cytotoxicity test, it can be seen that all cells die and appear white by the composition of the present invention regardless of infection (∘, ×) at a concentration diluted to 0.0500%. However, since it can be seen that the cells survive to have a purple color at a diluted concentration of 0.0375% or less, it was confirmed from these results that there is no cytotoxicity at a concentration of 0.0375% or less.

### Experimental Example 3: Measurement of cytotoxicity

Using Example 2 (the present invention, NB-3), Comparative Example 1 (composition of Patent Document 1, NB-1), and Comparative Example 2 (composition of Patent Document 2, NB-2) and existing commercially available products, as well as various surfactants, toxicity of each of the compositions according to the following Table 3 against to three types of cells such as human epithelial keratinocyte cells (HaCaT), human bronchial epithelial cells (BEAS-2B), and human monocyte cells (THP-1) have been evaluated as follows.

**[TABLE 3]**

| Sample name | Name | Note |
|---|---|---|
| P-1 | Sodium hypochlorite | Yuhan Rox, covid apoptosis dilution ratio (water:rox =50:1) |
| P-2 | Benzalconium chloride | Jobs Green Pure solution, covid apoptosis dilution ratio (water:chemical=65:1) |
| P-3 | Sodium stearate | Dissolved in D.W (but, dissolved only at a high temperature) |
| NB-1 | Neutra Best solution | Preservative x |
| NB-2 | Neutra Best clean V | Preservative x |
| NB-3 | NB-L solution | Preservative x |
| NB-4 | Neutra Best BC | pH 7.77 |
| NB-5 | Neutra Best BS | pH 9.93 |
| NB-6 | Neutra Best ES | pH 9.83 |
| NB-7 | Neutra Best LB | pH 6.57 |
| NB-8 | Neutra Best QC | pH 5.13 |
| NB-9 | Neutra Best SB | pH 3.92 |
| P1 : Yuhan Rox (commercially available disinfectant by other manufacturer) | | |
| P2 : Commercially available product containing cationic surfactant | | |
| P3 : Composition using surfactant made of solid sample | | |
| NB-1 : Composition of Patent Document 1 | | |
| NB-2 : Composition of Patent Document 2 | | |
| NB-3 : Composition of Example 2 of the present invention | | |
| NB-4, NB-8 : Composition containing cationic surfactant as a main component | | |
| NB-5, NB-6 : Composition containing anionic surfactant as a main component | | |
| NB-7, NB-9 : Composition containing amphoteric surfactant as a main component | | |

1. 0.5×10⁴ cells/well, 0.5×10⁴ cells/well, and 3×10⁴ cells/well of each cell line of HaCaT, BEAS-2B, and THP-1 cells were seeded on a cell seeding 96 well cell culture plate. The reason why the cell number is different is that the OD (optical density 570 nm) of the vehicle (Veh, group treated with only the drug solvent) was set at about 1.0 when setting the cell number conditions at first.

### 2. Treatment

The cells were spread on a 96 well cell culture plate and treated with the drug after 24 hours. A drop amount of the drug was diluted to about 1/100 of the volume of the medium (1 µl of the drug was dropped in 100 µl of medium). For example, in a 96 well plate, 100 µl of the medium was used when the cells were plated. Therefore, if intended to treat a drug with a final concentration of 0.0075%, it means that a drug of 0.75% as the initial concentration should be prepared. That is, it means that, when dropping 1 µl of 0.75% drug to 100 µl of medium, a concentration actually acting to the cells would be 0.0075%.

### 3. MTT solution

After 24 hours of previously treating the cells with the drug, MTT solution (1 mg/ml) was added in the same amount as the medium volume and allowed to react in an incubator for 2 to 3 hours. Here, the same amount of the medium volume means that the medium is 100 µl, and 100 µl of the MTT solution is added to the medium.

### 4. Insoluble formazan

When the above reaction is finished, a blue-purple insoluble material is formed on the bottom of the 96 well cell culture plate, which is a phenomenon occurring when MTT tetrazolium is reduced to water-insoluble MTT formazan by cellular respiration by mitochondria.

Therefore, after the reaction, the supernatant was completely removed, and the water-insoluble MTT formazan was dissolved in DMSO, an organic solvent, and the color depth was numerically defined using a microplate reader at an OD ₅₇₀ nm.

The IC₅₀ value (%) representing a biological inhibitory concentration was calculated by drawing a regression graph according to each concentration and obtaining an equation y = ax + b through the trend line to calculate the concentration of x for y = 50, and results thereof are shown in the following Table 4.

**[TABLE 4]**

| IC₅₀ value (%) | | | |
|---|---|---|---|
| | HaCaT | BEAS-2B | THP-1 |
| P1 | 0.001951 | 0.00243 | 0.00142 |
| P2 | 0.000412 | 0.00038 | 0.00119 |
| P3 | 0.005292 | 0.00969 | 0.4165 |
| NB-1 | 0.003644 | 0.00301 | 0.00413 |
| NB-2 | 0.003711 | 0.00319 | 0.00526 |
| NB-3 | 0.003608 | 0.00343 | 0.00419 |
| NB-4 | 0.000797 | 0.00394 | 0.00277 |
| NB-5 | 0.003953 | 0.0032 | 0.00517 |
| NB-6 | 0.005083 | 0.0031 | 0.00339 |
| NB-7 | 0.000907 | 0.00279 | 0.00286 |
| NB-8 | 0.005061 | 0.00039 | 0.00438 |
| NB-9 | 0.014485 | 0.00293 | 0.01497 |

Referring to the results of Table 4 above, the biological inhibitory concentration, IC₅₀ value (%), demonstrates the cytotoxicity value, such that the smaller the value, the more cytotoxic it is. In the case of NB-3 according to the present invention, it was confirmed that the cytotoxicity was less than that of the commercially available product (P2) using a cationic surfactant as a component contained in the humidifier disinfectant. That is, it can be seen that the cytotoxicity is low because it does not have significant effects on normal human cells.

### Experimental Example 4: Antibacterial activity

In order to assess the antibacterial activity of each composition for the same sample as in Experimental Example 3, the following procedure was performed. The paper disc method was used for an antibacterial activity test, and the strains and media used herein are shown in the following Table 5.

**[TABLE 5]**

| Microorganisms | KCTC No. | Media |
|---|---|---|
| *Bacillus subtilis* | 1021 | Nutrient broth (Becton and Dickinson, BD, NJ, USA) |
| *Candida albicans* | 7965 | Yeast Malt broth (BD, NJ, USA) |
| *Lactobacillus plantarum* | 3108 | MRS broth (BD, NJ, USA) |
| *Lactobacillus sakeisubsp. Sakei* | 3598 | |
| *Leuconostocmesenteroidessubsp. dextranicum* | 3530 | |
| *Escherichia coli* | 1924 | Luria Bertani broth (LPS, Korea) |
| *Pseudomonas aeruginosa* | 1750 | |
| *Salmonella typhimurium* | 1926 | |
| *Staphylococcus aureus* | 1927 | |
| *Staphylococcus epidermidis* | 1917 | |
| *Streptococcus mutans* | 3065 | |

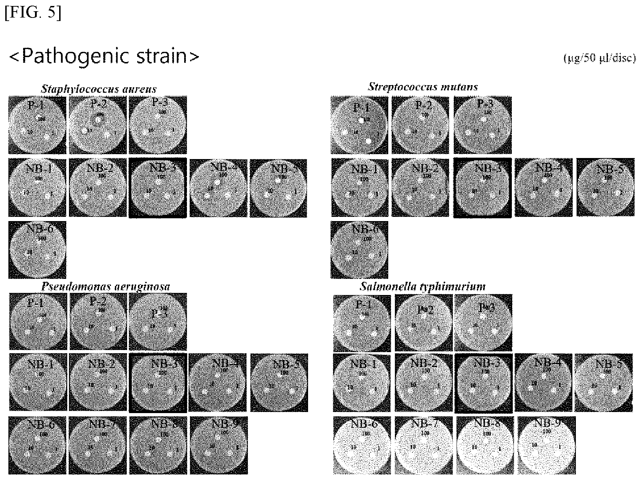

Each strain was cultured with shaking for 24 hours, and the bacterial solution was used as a seed culture solution. After preparing a medium suitable for each strain, 1.5% agar (Becton and Dickinson, BD, NJ, USA) was added to sterilize the medium, followed by cooling the sterilized medium and adding 1% of the seed culture solution at about 40 °C. Then, by dispensing 20 ml each, an antibacterial activity plate medium was prepared. Each sample was absorbed in 8 mm (Advantec Ltd., Tokyo, Japan) at concentrations of 1, 10 and 100 µg/50 µl, placed lightly on the surface of the antibacterial activity medium, and incubated at 37 °C for 18 to 24 hours, followed by investigating whether a growth inhibitory area (clear zone) was generated or not, and then measuring a diameter thereof. Results thereof are shown in the following Tables 6 to 7 and FIGS. 4 to 5.

**[TABLE 6]**

| **Non-pathogenic strain** | | | | | | | | | | | | |
|---|---|---|---|---|---|---|---|---|---|---|---|---|
| | **Gram positive strain** | | | | | | | | **Gram negative strain** | | | |
| | ***Bacillus subtilis*** | | | | ***Staphylococcus epidermidis*** | | | | ***Escherichia coli*** | | | |
| **µg/ 50 µl** | **1** | **10** | **100** | **MIC** | **1** | **10** | **100** | **MIC** | **1** | **10** | **100** | **MIC** |
| **P-1** | - | - | 12 | **50** | - | - | (12) | **50** | - | - | 12 | **50** |
| **P-2** | - | - | (11) | **50** | - | 12 | 20(30) | **5** | - | - | 14 | **50** |
| **P-3** | - | - | - | **≥100** | - | - | - | **≥100** | - | - | - | **≥100** |
| **NB-1** | - | - | - | **≥100** | - | - | (12) | **50** | - | - | - | **≥100** |
| **NB-2** | - | - | - | **≥100** | - | - | - | **≥100** | - | - | (13) | **50** |
| **NB-3** | - | - | - | **≥100** | - | - | (11) | **50** | - | - | - | **≥100** |
| **NB-4** | - | - | 15 | **50** | 10 | 18 | 21(30) | **≤1** | - | - | 14 | **50** |
| **NB-5** | - | - | - | **≥100** | - | - | 13 | **50** | - | - | - | **≥100** |
| **NB-6** | - | - | - | **≥100** | - | - | 12 | **50** | - | - | - | **≥100** |
| **NB-7** | - | - | - | **≥100** | - | - | 10 | **50** | - | - | - | **≥100** |
| **NB-8** | - | - | (12) | **50** | 10 | 17 | 25 | **≤1** | - | - | 11(17) | **50** |
| **NB-9** | - | - | - | **≥100** | - | - | - | **≥100** | - | - | - | **≥100** |

**[TABLE 7]**

| | **Pathogenic strain** | | | | | | | | | | | | | | | |
|---|---|---|---|---|---|---|---|---|---|---|---|---|---|---|---|---|
| | **Gram positive strain** | | | | | | | | **Gram negative strain** | | | | | | | |
| | ***Staphylococcus aureus*** | | | | ***Streptococcus mutans*** | | | | ***Pseudomonas aeruginosa*** | | | | ***Salmonella typhimurium*** | | | |
| **µg/ 50 µl** | **1** | **10** | **100** | **MIC** | **1** | **10** | **100** | **MIC** | **1** | **10** | **100** | **MIC** | **1** | **10** | **100** | **MIC** |
| **P-1** | - | - | 11 | **50** | - | - | 12 | **50** | - | - | 13 | **50** | - | - | 12 | **50** |
| **P-2** | - | 14 | 25 | **5** | - | (10) | 12 (24) | **5** | - | 11 | 24 | 5 | - | - | (11) | **50** |
| **P-3** | - | - | - | **≥100** | - | - | - | **≥100** | - | - | - | **≥100** | - | - | - | **≥100** |
| **NB-1** | - | - | 12 | **50** | - | - | 19 | **50** | - | - | 13 | **50** | - | - | (12) | **50** |
| **NB-2** | - | - | - | **≥100** | - | - | 12 | **50** | - | - | (10) | **50** | - | - | (12) | **50** |
| **NB-3** | - | - | (12) | **50** | - | - | (11) | **50** | - | - | 10 | **50** | - | - | - | **≥100** |
| **NB-4** | 9 | 22 | 26 | **≤1** | - | (14) | 14 (26) | **5** | - | 16 | 26 | 5 | - | - | (10) | **50** |
| **NB-5** | - | - | 16 | **50** | - | - | 18 | **50** | - | 11 | 22 | 5 | - | - | (11) | **50** |
| **NB-6** | - | - | - | **≥100** | - | - | 11 | **50** | - | - | 11 | **50** | - | - | - | **≥100** |
| **NB-7** | | | | | | | | | - | - | 10 | **50** | - | - | - | **≥100** |
| **NB-8** | | | | | | | | | - | 16 | 31 | 5 | - | - | 15 | **50** |
| **NB-9** | | | | | | | | | - | - | - | **≥100** | - | - | - | **≥100** |

Referring to the results of Tables 6 to 7 above and FIGS. 4 to 5, the composition (NB-3) according to the present invention had a minimum inhibitory concentration (MIC) value of 100 or more in a gram positive strain of *Bacillus subtilis* and a gram negative strain among non-pathogenic strains, as well as in *Salmonella typhimurium* among pathogenic strains, and 50 or more in the rest.

In the case of pathogenic strains, it can be determined that the lower the MIC concentration, the better the antibacterial activity. However, in general, it is favorable that non-pathogenic strains have no antibacterial activity. The composition of the present invention shows a result conformable with the above effects although there is a little difference therebetween.

### [Industrial Applicability]

The antiviral composition according to the present invention can increase affinity with the phospholipid membrane included in the enveloped virus by using the material having a linear structure as the main component thus to improve permeability when penetrating into the phospholipid bilayer membrane and effectively dissolving it, thereby effectively fusing the layer and thus effectively removing a variety of enveloped viruses.

Further, after breaking the phospholipid bilayer membrane of the enveloped virus, it should be able to stably exist in an emulsion state in water. Even at this time, a degree of stability can be improved due to the linear structure of the substance included as the main component.

In addition, since the possibility of biodegradation is high after use, it is possible to provide an environmentally friendly quarantine composition compared to the use of a conventional material having a branch structure.

Therefore, the environmentally friendly quarantine composition according to the present invention can be effectively used to remove enveloped viruses including, for example, COVID-19, avian influenza, SARS, African swine fever virus and the like.

## Claims

1. An eco-friendly quarantine composition having a function of killing a phospholipid enveloped virus, the composition comprising: 10 to 40% by weight of polyoxyethylene lauryl ether; 0.01 to 10% by weight of polyoxyethylene 2-ethylhexyl ether; 0.01 to 10% by weight of polyoxyethylene polyoxypropylene alkyl ether and a balance of solvent, based on a total 100% by weight of the composition.

2. The composition according to claim 1, wherein SARS-CoV-2 virus removal rate in a diluted solution containing 0.1% by weight or less of the composition is 100% in 1 minute.

3. The composition according to claim 1, wherein 100% of highly pathogenic avian influenza virus in a diluted solution containing 0.1% by weight or less of the composition is killed in 1 to 10 minutes.

4. The composition according to claim 1, wherein the composition has low cytotoxicity such that IC₅₀ value (%) for human epithelial keratinocyte cells (HaCaT), human bronchial epithelial cells (BEAS-2B), and human monocyte cells (THP-1) is in a range of 0.003 to 0.0045.

5. The composition according to claim 1, wherein the composition has antibacterial activity against non-pathogenic strains, and pathogenic strains.

6. The composition according to claim 1, wherein the composition maintains pH of 6 to 8.

7. The composition according to claim 1, wherein the composition is used by diluting the composition in water with a content of 0.01% to 0.05%.

8. The composition according to claim 1, wherein the balance of solvent further comprising 20% by weight or less of ethanol.

9. The composition according to claim 1, further comprising a preservative within 0.1% by weight of the total weight of the composition.
